(19) Europäisches Patentamt
European Patent Office
Office européen des brevets

(11) **EP 2 123 339 B1**

(12) **EUROPÄISCHE PATENTSCHRIFT**

(45) Veröffentlichungstag und Bekanntmachung des Hinweises auf die Patenterteilung:
**19.12.2012 Patentblatt 2012/51**

(51) Int Cl.:
***B01D 19/00*** *(2006.01)*  ***B05B 1/30*** *(2006.01)*

(21) Anmeldenummer: **09005835.5**

(22) Anmeldetag: **27.04.2009**

(54) **Einlaufventil, Vorrichtung, Steuerverfahren und System zur Entgasung von Flüssigkeiten**

Inlet valve, device, control method and system for removing gas from fluids

Soupape d'admission, dispositif, procédé de commande et système de dégazage de liquides

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **19.05.2008 DE 102008024150**

(43) Veröffentlichungstag der Anmeldung:
**25.11.2009 Patentblatt 2009/48**

(73) Patentinhaber: **Krones AG**
**93073 Neutraubling (DE)**

(72) Erfinder:
• **Feilner, Roland, Dipl.-Ing. (FH)**
**93055 Regensburg (DE)**

• **Rothe, Michael**
**93083 Obertraubling (DE)**

(74) Vertreter: **Kuhnen & Wacker**
**Patent- und Rechtsanwaltsbüro**
**Prinz-Ludwig-Strasse 40A**
**85354 Freising (DE)**

(56) Entgegenhaltungen:
**EP-A2- 0 308 993    DE-A1- 10 308 099**
**GB-A- 2 078 541    JP-A- 2003 164 706**
**US-A- 3 307 824    US-A- 5 862 992**

**Beschreibung**

Die Erfindung betrifft ein Einlaufventil zum Einbringen von Flüssigkeiten in eine Entgasungsvorrichtung nach dem Oberbegriff des Anspruchs 1, eine Vorrichtung zum Entgasen von Flüssigkeiten nach dem Oberbegriff des Anspruchs 2, ein Verfahren zur Steuerung des Entgasens von Flüssigkeiten nach dem Oberbegriff des Anspruchs 3 und ein Verfahren zum Entgasen von Flüssigkeiten nach dem Oberbegriff des Anspruchs 5.

Das Entgasen von Flüssigkeiten, wie beispielsweise von flüssigen Lebensmitteln, insbesondere Getränken, erfolgt herkömmlich in einer Entgasungsvorrichtung. Dabei wird die Flüssigkeit einem verminderten Absolutdruck oft in Kombination mit einer gegenüber der Raumtemperatur erhöhten Temperatur ausgesetzt. Um eine möglichst weitgehende Entgasung der Flüssigkeit zu erreichen, ist es erforderlich, alle Volumenelemente der Flüssigkeit den vorstehend genannten Bedingungen auszusetzen. Dazu wird die Flüssigkeit entweder durch Versprühen oder in Gestalt eines dünnen Films in die Entgasungsvorrichtung eingebracht.

In der Druckschrift JP 2003-164706 wird eine Entgasungsvorrichtung vorgeschlagen, bei der die zu entgasende Flüssigkeit senkrecht von oben und coaxial zur Mittenachse in einen tankförmigen Entgasungsbehälter eingebracht wird. Das Innere des Entgasungsbehälters weist einen verminderten Absolutdruck auf. Im Detail erfolgt die Zuführung durch ein Einlaufventil, das im oberen Bereich des Entgasungsbehälters angeordnet ist. Dabei tritt die Flüssigkeit durch einen fest voreingestellten Ringspalt aus dem Einlaufventil in den Entgasungsbehälter ein. Der Ringspalt wird bei geöffnetem Einlaufventil von einem Ventilsitz und einem Ventilkegel begrenzt. Der Ventilsitz ist der untere Endabschnitt des Einlaufventil-Gehäuses. Der Ventilkegel ist durch eine Steuereinrichtung derart antreibbar, dass zwei Ventilzustände, nämlich ein vollständig geöffneter Ventilzustand und ein vollständig geschlossener Ventilzustand, verwirklicht werden können.

Beim Durchtreten der Flüssigkeit durch den Ringspalt bei geöffnetem Einlaufventil strömt die Flüssigkeit über den Ventilkegel in den Entgasungsbehälter ein. Dabei ist der Ventilkegel als Schirm ausgebildet, der einen gegenüber dem Einlaufventil vergrößerten Durchmesser aufweist und von der Mittelachse des Einlaufventils, welche coaxial zur Mittelachse des Entgasungsbehälters angeordnet ist, radial nach außen hin abfällt. Die ausströmende Flüssigkeit bildet idealerweise einen dünnen Film auf dem Ventilkegel aus, wobei sich der Film an der den Kegel abschließenden Kante ablöst. Der Flüssigkeitsfilm trifft auf die Wand des Entgasungsbehälters auf und läuft vertikal nach unten ab.

Aus der Schrift DE 297 22 673 U1 ist eine Vorrichtung zum Entgasen von empfindlichen Lebensmitteln mit viskoser Konsistenz bekannt, bei der ein rotierender, kegelförmiger Teller zur Erzeugung eines dünnen Flüssigkeitsfilms vorgeschlagen wird. Hierbei entspricht der Durchmesser des rotierenden Tellers annähernd dem Innendurchmesser des Entgasungsbehälters, wobei zwischen Tellerrand und Behälterwand ein schmaler, ringförmiger Spalt ausgebildet wird. Während des Entgasungsvorgangs verteilt sich die viskose Flüssigkeit aufgrund der durch die Rotationsbewegung einwirkenden Scherkräfte auf dem Teller. Dabei bildet die Flüssigkeit einen fließenden Film aus, der über die gesamte Wegstrecke vom Einlaufventil bis zum Tellerrand in der Nähe der Behälterwand auf der Oberfläche des Tellers aufliegt.

Die Verwendung eines fest voreingestellten Ringspalts, der durch ein vollständig geöffnetes Einlaufventil ausgebildet wird, ist insofern nachteilig, als es bei der Entgasung verschiedener Flüssigkeiten und/oder unter sich ändernden physikalischen Randbedingungen zu einer nicht optimalen Filmbildung hinsichtlich des Austrags von Gasen aus der Flüssigkeit kommen kann. Werden verschiedene Flüssigkeiten mit derselben Einlaufvorrichtung bei fest voreingestelltem Ringspalt in die Entgasungsvorrichtung eingebracht, so kann es in Folge der unterschiedlichen Strömungs- bzw. Fließverhalten der Flüssigkeiten zur Ausbildung unterschiedlicher Flüssigkeitsfilme kommen, die von der für die Entgasung optimalen Filmgestalt zwangsweise abweichen. Neben den physikalischen Randbedingungen bestimmt im Wesentlichen die Zusammensetzung einer Flüssigkeit deren rheologische Eigenschaften und somit deren Strömungsverhalten. Die Zusammensetzung wird wiederum vom Lösungsmittel, im Anwendungsfall insbesondere Wasser oder Öl, und von Menge und Art der gelösten Inhaltsstoffe bestimmt. Im Falle von Suspensionen wirkt sich zudem der Feststoffgehalt auf die Strömungseigenschaften aus.

Somit kann es bei einem fest vorgegebenen Ringspalt nicht nur im Falle von Umstellungen zwischen verschiedenen Flüssigkeiten, sondern auch beim Entgasen eines inhomogenen Flüssigkeitsbatches, d.h. bei variabler Zusammensetzung der Flüssigkeit, zu Schwankungen bei der Filmbildung kommen.

Folglich kann es zu einer Abweichung von der für die Entgasung optimalen Filmdicke kommen, so dass die Flüssigkeit nur unzureichend entgast wird.

Ein weiterer Nachteil eines fest eingestellten Ringspalts ist, dass die Ausbildung eines Flüssigkeitsfilms optimaler Dicke bei vorgegebener und fest eingestellter Spaltbreite einen konstanten Volumenstrom der in die Entgasungsvorrichtung einströmenden Flüssigkeit voraussetzt. Bedingt durch äußere Einwirkungen, insbesondere durch Einflüsse von vor- oder nachgeschalteten Aggregaten in einem kontinuierlichen Herstellungs- bzw. Verarbeitungsprozess, kann es zu Schwankungen im Flüssigkeitsvolumenstrom bei der Entgasung kommen. Ein vom ursprünglich vorgesehenen Sollwert abweichender Volumenstrom führt jedoch zur Ausbildung eines im Hinblick auf die Entgasung nicht optimalen Flüssigkeitsfilms und mithin zu einem unzureichenden Entgasungsergebnis.

Neben den unzureichenden Entgasungsergebnissen können Abweichungen vom optimalen Flüssigkeitsfilm während des Entgasungsvorgangs auch zu verstärktem Schäumen der Flüssigkeit führen. Erreicht die Schaumbildung eine derartige Intensität im Entgasungsbehälter, dass der Schaum die - oftmals coaxial im Einlaufventil mitintegrierte - Vakuumabsaugung erreicht, kann es zur Störung des Entgasungsvorgangs und gegebenenfalls des gesamten Herstellungsverfahrens kommen.

Der Erfindung liegt daher die Aufgabe zugrunde, zumindest ein gattungsgemäßes Einlaufventil zum Einbringen einer Flüssigkeit in eine Entgasungsvorrichtung, oder eine gattungsgemäße Vorrichtung zum Entgasen von Flüssigkeiten, oder ein gattungsgemäßes Verfahren zur Steuerung des Entgasens von Flüssigkeiten, oder ein gattungsgemäßes System zum Entgasen von Flüssigkeiten derart weiterzubilden, dass eine optimale Entgasung auch bei einer Änderung der Zusammensetzung der zu entgasenden Flüssigkeit oder bei einem Umschalten auf eine andere Flüssigkeit, erreicht wird.

Diese Aufgabe wird in vorrichtungstechnischer Hinsicht durch das Einlaufventil zum Einbringen von Flüssigkeiten in eine Entgasungsvorrichtung mit den Merkmalen des Anspruchs 1 und durch die Vorrichtung zum Entgasen von Flüssigkeiten mit den Merkmalen des Anspruchs 2 gelöst.

Ferner wird die Aufgabe in verfahrenstechnischer Hinsicht durch das Verfahren zur Steuerung des Entgasens von Flüssigkeiten mit den Merkmalen des Anspruchs 3 und in vorrichtungstechnischer/verfahrenstechnischer Hinsicht durch das Verfahren zum Entgasen von Flüssigkeiten mit den Merkmalen des Anspruchs 5 gelöst.

Erfindungsgemäß wird erstmals ein Einlaufventil zum Einbringen einer Flüssigkeit in eine Entgasungsvorrichtung vorgeschlagen, wobei das Einlaufventil ein Ventilgehäuse, ein Flüssigkeitsleitelement, und eine dem Einlaufventil zugeordnete Steuereinrichtung aufweist. Dabei ist zwischen dem Flüssigkeitsleitelement und dem Ventilgehäuse eine Öffnung bzw. Ausströmöffnung ausgebildet, durch welche die Flüssigkeit in die Entgasungsvorrichtung einbringbar ist. Ferner ist die durch das Einlaufventil strömende Flüssigkeit an einer Oberfläche des Flüssigkeitsleitelements unter Ausbildung eines Flüssigkeitsfilms umlenkbar. Zudem ist der Flüssigkeitsfilm schirmartig ausbildbar. Weiter ist die Größe der Öffnung mit Hilfe der Steuereinrichtung zwischen einer vollständig geöffneten und einer vollständig geschlossenen Stellung beliebig veränderbar.

Hierbei erleichtert die Ausbildung eines Flüssigkeitsfilms die Entgasung der Flüssigkeit, da ihre Oberfläche bei Vorliegen der Filmgestalt wesentlich vergrößert ist. Ferner hat der schirmartige Flüssigkeitsfilm ab dem Austritt aus dem Einlaufventil bis zum Auftreffen auf eine Behälterwand keinen Kontakt mit einer festen Oberfläche. Damit steht nicht nur die Oberseite, sondern auch die Unterseite des Flüssigkeitsfilms in Kontakt mit der Umgebung, so dass eine größtmögliche Wechselwirkung zwischen dem Flüssigkeitsfilm und der unter Entgasungsbedingungen stehenden Umgebung ermöglicht wird.

Darüber hinaus wirken bei der Ausbildung des Flüssigkeitsfilms mittels des Flüssigkeitsleitelements des erfindungsgemäßen Einlaufventils geringe Scherkräfte auf die zu entgasende Flüssigkeit. Aufgrund der Einwirkung nur geringfügiger mechanischer Kräfte wird die Flüssigkeit geschont. Somit bleibt die Flüssigkeitsqualität weitestgehend erhalten.

Vorteilhaft ist ferner, wenn der durch das Flüssigkeitsleitelement erzeugte Flüssigkeitsfilm schirmartig ausbildbar ist. Infolge einer schirmartigen Ausbildung wird ein großes Oberfläche-zu-Volumen-Verhältnis erzeugt, wodurch die in der Flüssigkeit enthaltenen Gase besser ausgetrieben werden können.

Ferner ist es erfindungsgemäß erstmals möglich, die Größe der Flüssigkeits-Austrittsöffnung des Einlaufventils beliebig zu verändern. Durch die flexible Größeneinstellung der Öffnung können strömungsrelevante Eigenschaften der Flüssigkeit, wie insbesondere deren Viskosität, Zusammensetzung oder Feststoffgehalt, hinsichtlich der Ausbildung eines optimalen Flüssigkeitsfilms berücksichtigt werden. Die Ausbildung eines optimalen Flüssigkeitsfilms ermöglicht wiederum einen optimalen Entgasungserfolg bei minimaler Schaumbildung. Somit wird erstmals eine an die Eigenschaften einer Flüssigkeit angepasste Zuführung im Rahmen eines Entgasungsvorgangs verwirklicht.

Zudem wird trotz Schwankungen des Flüssigkeitsvolumenstroms eine optimale Entgasung einer Flüssigkeit erreicht.

Ferner wird ein Schäumen der zu entgasenden Flüssigkeit im Innern einer Entgasungsvorrichtung vermieden oder zumindest weitgehend vermindert. Die Vermeidung oder Verminderung der Schaumbildung betrifft sowohl die Änderung der Flüssigkeitszusammensetzung, als auch die Volumenstromschwankungen.

Das Flüssigkeitsleitelement kann einen Durchmesser aufweisen, der zwischen dem 0,85-fachen bis 1,5-fachen, insbesondere zwischen dem 0,95-fachen bis 1,1-fachen des Durchmessers des Ventilgehäuses beträgt.

Erfindungsgemäß ist zudem vorgesehen, dass der durch das Flüssigkeitsleitelement erzeugte Flüssigkeitsfilm auf einen vorbestimmten Bereich einer Innenwand der Entgasungsvorrichtung auftrifft. Neben einer hinreichenden Entgasung durch Ausbilden eines optimalen Flüssigkeitsfilms kann hierdurch ein gleichmäßiger Ablauf der Flüssigkeit in im Wesentlichen vertikaler Richtung an der Behälterinnenwand ermöglicht werden. Wird der obere Bereich der Innenwand des Entgasungsbehälters als der vorbestimmte Bereich gewählt, so kann ein größtmöglicher Oberflächeninhalt der Behälterinnenwand als Entgasungsfläche genutzt werden. Zudem wird eine übermäßige Schaumbildung vermieden.

In einer vorteilhaften Weiterbildung ist die Größe der Öffnung in Abhängigkeit vom Volumenstrom der durch das Einlaufventil strömenden Flüssigkeit steuerbar. Eine Entgasung von Flüssigkeiten, wie sie beispielsweise bei der Herstellung von Getränken oder viskosen und/oder flüssigen Lebensmitteln Verwendung findet, ist meist in eine Kette von mehreren Verfahrensschritten eingebunden. Kommt es bei einem der vor- oder nachgeschalteten Verfahrensschritte, wie beispielsweise einem Abfüllschritt, zu einer Störung, so kann eine Drosselung des beim Entgasen durchgesetzten Volumenstroms erforderlich sein. Beim herkömmlichen Einlaufventil führt eine Änderung des Volumenstroms der zu entgasenden Flüssigkeit wegen der fest eingestellten Ausströmöffnung (Ringspalt) zwangsläufig zu einer Gestaltsänderung des austretenden Flüssigkeitsfilms bzw. - schirms. Somit ist eine Abweichung von der für eine Entgasung und Schaumvermeidung optimalen Filmdicke sowie Schirmgestalt und -durchmesser unvermeidlich. Nun ist es erstmals möglich, den Flüssigkeitsfilm dahingehend zu steuern, dass durch die Veränderung der Größe der Ausströmöffnung stets ein optimaler Flüssigkeitsfilm selbst bei einer Änderung des Volumenstroms ausgebildet wird. Erfindungsgemäß lassen sich Durchsätze im Bereich von etwa 30 bis 100 % des maximalen Volumenstroms der Entgasungsvorrichtung bei Ausbildung eines optimalen Flüssigkeitsfilms realisieren.

Weitere Ausführungsformen sehen eine Steuerbarkeit der Größe der Öffnung in Abhängigkeit von der Viskosität, vom Druck und/oder von der Temperatur der durch das Einlaufventil strömenden Flüssigkeit vor. Damit werden erstmals diese das Strömungsverhalten einer Flüssigkeit wesentlich beeinflussenden Eigenschaften und/oder Randbedingungen zur Erzeugung eines optimalen Flüssigkeitsfilms vorteilhaft berücksichtigt.

In verfahrenstechnischer Hinsicht werden die Aufgaben und Aspekte durch das erfindungsgemäße Verfahren zur Steuerung des Entgasens von Flüssigkeiten gelöst. Dabei wird eine Flüssigkeit in eine Entgasungsvorrichtung mittels eines Einlaufventils eingebracht. Ferner weist das Einlaufventil ein Ventilgehäuse, ein Flüssigkeitsleitelement, und eine dem Einlaufventil zugeordnete Steuereinrichtung auf. Zudem ist zwischen dem Flüssigkeitsleitelement und dem Ventilgehäuse eine Öffnung ausgebildet, durch welche die Flüssigkeit in die Entgasungsvorrichtung eingebracht wird. Darüber hinaus wird die durch das Einlaufventil strömende Flüssigkeit an einer Oberfläche des Flüssigkeitsleitelements unter Ausbildung eines Flüssigkeitsfilms umgelenkt. Zudem ist der Flüssigkeitsfilm schirmartig ausgebildet. Schließlich ist die Größe der Öffnung mit Hilfe der Steuereinrichtung zwischen einer vollständig geöffneten und einer vollständig geschlossenen Stellung beliebig veränderbar.

Für das erfindungsgemäße Verfahren nach Anspruch 3 und dessen vorteilhafte Weiterbildungen nach den Ansprüchen 4 bis 5 gelten alle die für die erfindungsgemäßen Vorrichtungen aufgeführten Merkmale und Vorteile in analoger Weise.

Des Weiteren gelten alle für das erfindungsgemäße Einlaufventil, die erfindungsgemäße Vorrichtung zum Entgasen von Flüssigkeiten und das erfindungsgemäße Verfahren aufgeführten Merkmale und Vorteile in analoger Weise für das erfindungsgemäße Verfahren zum Entgasen von Flüssigkeiten nach Anspruch 5.

Die Erfindung wird nachfolgend in Ausführungsbeispielen anhand der Figuren der Zeichnung näher erläutert. Es zeigt:

Fig. 1    eine schematische Schnittansicht einer beispielhaften Ausführungsform eines erfindungsgemäßen Einlaufventils;

Fig. 2    eine schematische perspektivische Ansicht des erfindungsgemäßen Einlaufventils aus Fig. 1;

Fig. 3    eine schematische, detaillierte Schnittansicht des erfindungsgemäßen Einlaufventils aus Fig. 1;

Fig. 4    eine schematische Schnittansicht einer weiteren beispielhaften Ausführungsform eines erfindungsgemäßen Einlaufventils;

Fig. 5    eine schematische Schnittansicht einer beispielhaften Ausführungsform einer erfindungsgemäßen Vorrichtung zum Entgasen von Flüssigkeiten; und

Fig. 6    eine Darstellung eines Diagramms, das zwei Kalibrierfunktionen für ein volumenstromabhängige Steuerverfahren des Öffnungsgrads des erfindungsgemäßen Einlaufventils veranschaulicht.

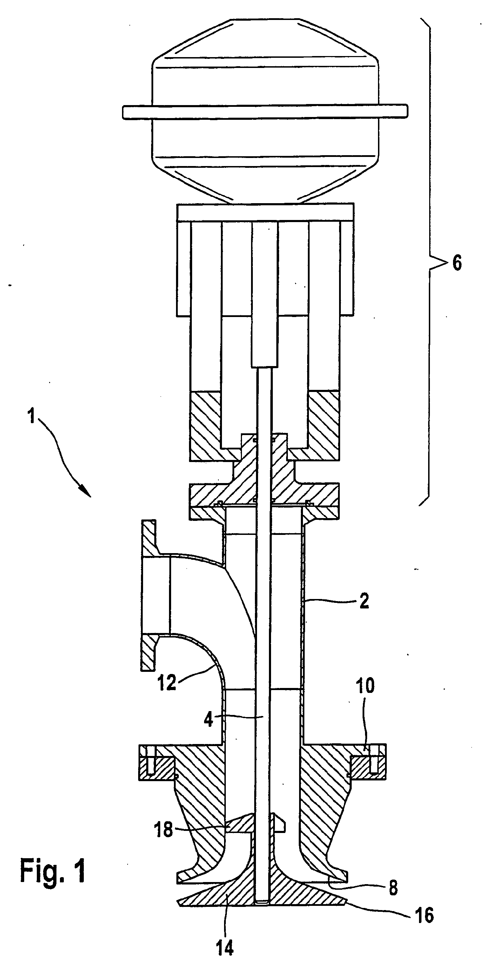

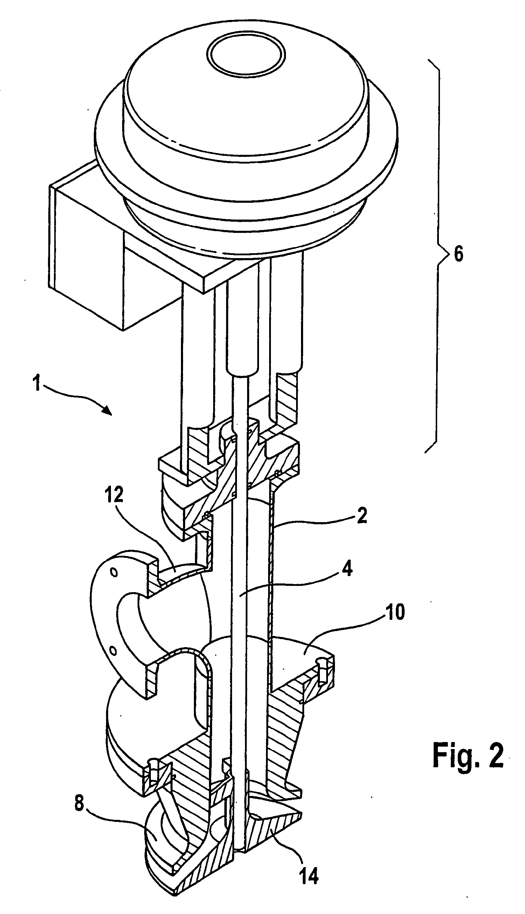

Gemäß der Darstellung in den Fig. 1 und 2 weist ein Einlaufventil 1 zum Einbringen von Flüssigkeiten in eine Entgasungsvorrichtung ein Ventilgehäuse 2, ein Flüssigkeitsleitelement 4 und eine dem Einlaufventil 1 zugeordneten Steuereinrichtung 6 auf.

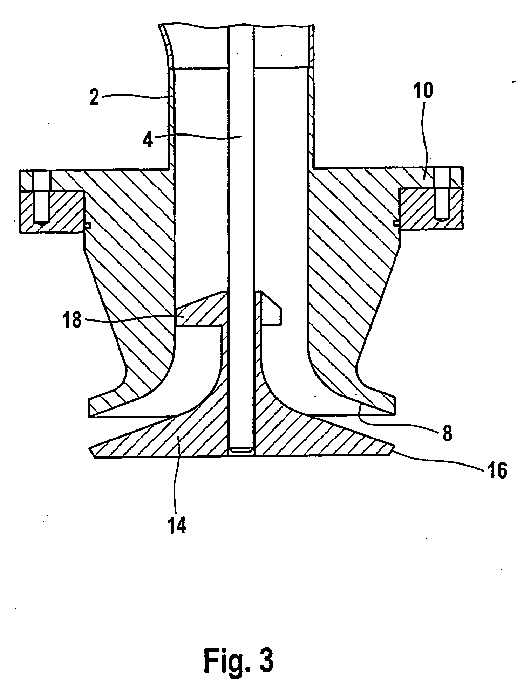

Das Ventilgehäuse 2 ist im Wesentlichen rohrförmig ausgebildet und weist in seinem unteren Bereich einen als Ventilsitz 8 ausgebildeten Endabschnitt auf, der in Detail in Fig. 3 dargestellt ist. Das rohrförmige Ventilgehäuse 2 kann eine kreisrunde, ovale, dreieckige, viereckige, mehreckige oder dergleichen ausgebildete Querschnittsgestalt aufweisen. Ferner weist das Ventilgehäuse 2 einen Flansch 10 zum Einbau in einen Entgasungsbehälter einer Entgasungsvorrichtung auf. Nach Einbau sind alle Teile des Einlaufventils 1, die unterhalb des Flansches 10 angeordnet sind, im Innern des Entgasungsbehälters angeordnet. Im oberen Endbereich weist das Einlaufventil 1 eine Zuführeinrichtung 12 zum Zuführen der zu entgasenden Flüssigkeit in das Einlaufventil 1 auf. Die Zuführeinrichtung 12 ist im Wesentlichen rohrförmig ausgeführt und weist an ihrem äußeren Endabschnitt einen Flansch zum Anschließen eines Rohrs oder Schlauchs auf. Die Mittelachse der Zuführeinrichtung 12 ist an ihrem äußeren Endabschnitt im Wesentlichen senkrecht zur Mittelachse des Einlaufventils 1 angeordnet.

Das Flüssigkeitsleitelement 4 weist eine im Wesentlichen stabförmige Gestalt auf, wobei sein unterer Endabschnitt als ein Ventilteller 14 ausgebildet ist, der in Detail in Fig. 3 dargestellt ist. Dabei weist der Ventilteller 14 eine Oberflächenkrümmung auf, die vom stabförmigen Abschnitt bis zum äußeren Bereich des Ventiltellers 14 fließend, d.h. stufenlos bzw. kontinuierlich, übergeht. Die dem Ventilgehäuse 2 zugewandte Seite des Ventiltellers 14 weist eine im Wesentlichen von der Zentralachse des Flüssigkeitsleitelements 4 nach außen schräg abfallende Kontur auf. Der Ventilteller 14 weist an seinem äußeren Radius ferner eine hinterschnittene Abrisskante 16 auf. Der obere Endabschnitt des Flüssigkeitsleitelements 4 ist mit der Steuereinrichtung 6 verbunden und ist durch diese in axialer Richtung antreibbar. Ferner weist das Flüssigkeitsleitelement 4 eine Mehrzahl von zapfenförmigen Vorsprüngen 18 zur Zentrierung des Flüssigkeitsleitelements 4 im Innenraum des Einlaufventils 1 auf. Das Flüssigkeitsleitelement 4 kann in seinem Innern einen über seine gesamte Länge erstreckenden Hohlraum aufweisen, der beispielsweise als Absaugungseinrichtung zur Erzeugung eines Unterdrucks in einem Entgasungsbehälter verwendet werden kann.

In einer besonders vorteilhaften Ausführungsform ist die Zuführeinrichtung 12 als ein Einlaufkrümmer mit einer Beruhigungsstrecke ausgebildet. Dabei ist der Übergang von der Zuführeinrichtung 12 zum Innenraum des Ventilgehäuses 2 stufenlos als Kurve ausgebildet. Der Ventilsitz 8 weist eine der Oberseite des Ventiltellers 14 des Flüssigkeitsleitelements 4 im Wesentlichen parallele Gestalt auf.

Die Steuereinrichtung 6 dient dem stufenlosen Heben und Senken des Flüssigkeitsleitelements 4. Sie kann mechanisch, elektrisch, pneumatisch oder hydraulisch antreibbar sein. Mit Hilfe der Steuereinrichtung 6 ist das Flüssigkeitsleitelement 4 zwischen einer vollständig geöffneten und einer vollständig geschlossenen Stellung beliebig veränderbar. Dabei nimmt die Steuereinrichtung 6 Messsignale von einem oder mehreren Signalaufnehmern (nicht dargestellt) auf. Beispiele für Signalaufnehmer sind Messvorrichtungen für die nachfolgenden Parameter: Durchfluss, Viskosität, Temperatur und Druck. Die aufgenommenen Messsignale werden von der Steuereinrichtung 6 oder einer anderen Verarbeitungseinrichtung in Steuersignale umgewandelt, mit denen ein Stellmotor oder dergleichen zur Verstellung der axialen Position des Flüssigkeitsleitelements 4 gesteuert wird.

Das Öffnen des Einlaufventils 1 geschieht durch Absenken des Flüssigkeitsleitelements 4 mit Hilfe der Steuereinrichtung 6, wobei eine Öffnung bzw. ein Ringspalt zwischen dem Ventilteller 14 und dem Ventilsitz 8 ausgebildet wird. Das Schließen des Einlaufventils 1 geschieht durch Anheben des Flüssigkeitsleitelements 4 mit Hilfe der Steuereinrichtung 6, wobei der Ventilteller 14 mit dem Ventilsitz 8 abdichtend in Eingriff kommt. In der Ausführungsform der Fig. 1 bis 3 ist eine teilweise geöffnete Stellung des Einlaufventils 1 dargestellt.

Während des Entgasungsvorgangs beträgt die Spaltbreite zwischen dem Ventilteller 14 und dem Ventilsitz 8 zwischen 0 bis 40 mm. Besonders vorteilhaft ist eine Spaltbreite zwischen 10 bis 20 mm. Insbesondere ist eine Spaltbreiteneinstellung von etwa 15 mm zu bevorzugen. Dies steht in direkter Abhängigkeit zum Volumenstrom und Viskosität des Mediums.

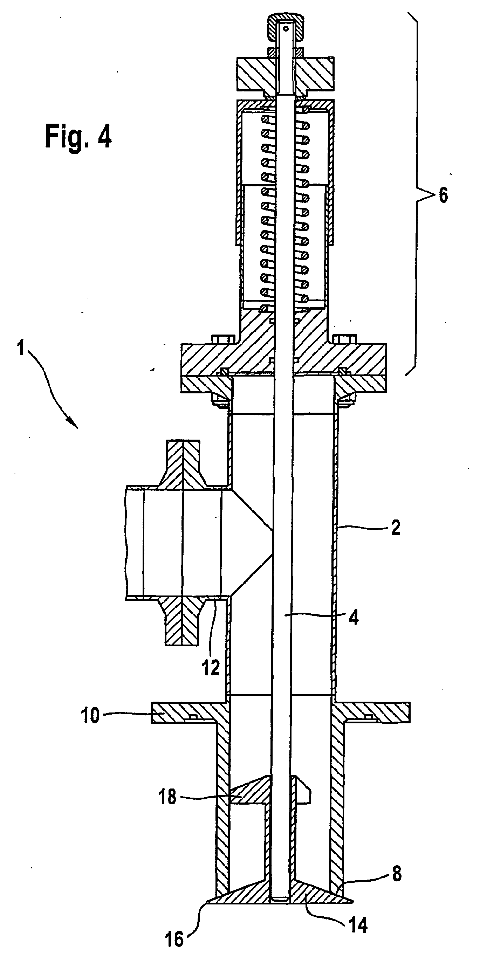

In Fig. 4 ist eine weitere Ausführungsform des erfindungsgemäßen Einlaufventils 1 dargestellt. Im nachfolgenden werden nur die Abweichungen zu der in den Fig. 1 bis 3 dargestellten Ausführungsformen beschrieben. So ist die Zuführeinrichtung 12 als rohrförmiger Ansatz ausgeführt, wobei die Zuführeinrichtung 12 an den Innenraum des Ventilgehäuses 2 rechtwinklig mit scharfer Kante angeschlossen ist.

Des Weiteren ist die Steuereinrichtung 6 als eine Federkonstruktion ausgebildet.

Schließlich weist der Ventilteller 14 des Flüssigkeitsleitelements 4 anstelle einer Krümmung einen stufenartigen Übergang vom stabförmigen Abschnitt zum äußeren Bereich des Ventiltellers 14 auf. Die dem Ventilgehäuse 2 zugewandte Oberfläche des Ventiltellers 14 ist nach außen linear abfallend. Ferner weist der Ventilteller 14 eine Abrisskante 16 ohne Hinterschneidung auf.

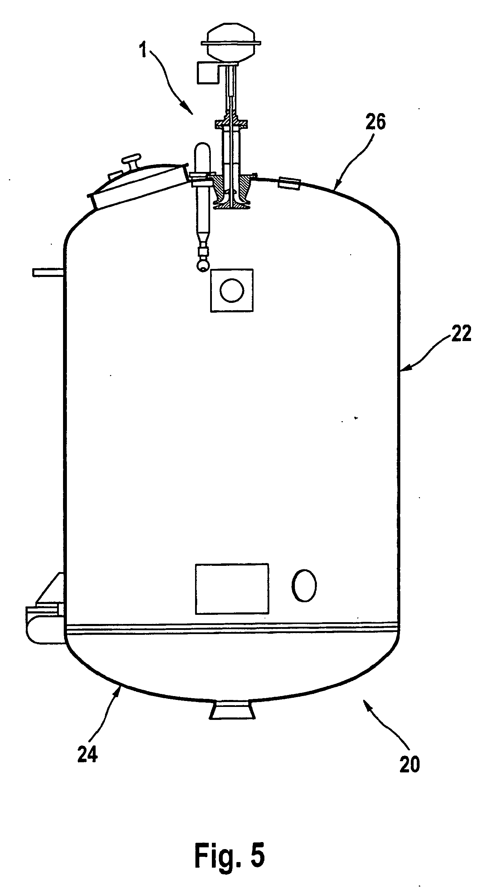

Fig. 5 stellt eine Ausführungsform einer erfindungsgemäßen Vorrichtung 20 zum Entgasen von Flüssigkeiten dar. Die Vorrichtung 20 weist das erfindungsgemäße Einlaufventil 1 und einen Entgasungsbehälter 22 auf. Alle weiteren Aggregate, wie beispielsweise Pumpen oder Steuereinrichtungen, sind die einer bekannten Entgasungsvorrichtung und werden daher nicht näher beschrieben.

In der Ausführungsform der erfindungsgemäßen Vorrichtung 20 zum Entgasen von Flüssigkeiten ist der Entgasungsbehälter 22 ein im Wesentlichen zylindrischer Tank mit vertikaler Zarge, einem Boden 24 und einem gewölbtem Dom bzw. Tankdecke 26, der beispielsweise Anschlüsse für die Vakuumerzeugung und Reinigung aufweist. Im tiefsten Punkt des Bodens 24 ist ein Flüssigkeitsablauf angeordnet. Das erfindungsgemäße Einlaufventil 1 ist in der Mitte des Doms 26 angeordnet, wobei die Mittelachse des Einlaufventils parallel zur Mittelachse des Entgasungsbehälters 22 angeordnet ist (senkrechte Anordnung). Das Einlaufventil 1 kann aber auch an einer beliebigen Stelle im Dom 26 oder in der Seitenwand des Entgasungsbehälters 22 angeordnet sein.

Abgesehen von einer senkrechten Anordnung des Einlaufventils 1 ist auch jede beliebige, von der senkrechten Anordnung abweichende Positionierung denkbar. Insbesondere ist auch eine zur Mittelachse des Entgasungsbehälters 22 horizontale Anordnung denkbar. Der Anschluss für die Vakuumerzeugung kann an einer beliebigen Stelle des Entgasungsbehälters angeordnet sein. Beispielsweise kann das Reinigungssystem verwendet werden, um das Vakuum anzuschließen. Darüber hinaus besteht die Möglichkeit, bei Vorliegen des vorstehend beschriebenen, coaxialen Hohlraums im Flüssigkeitsleitelement 4 des Einlaufventils 1, diesen Hohlraum für einen Vakuumanschluss zu verwenden.

Der erfindungsgemäße Entgasungsbehälter 22 weist einen Durchmesser von 1,3 bis 1,8 m, insbesondere von 1,2 bis 1,5 m auf. Die Höhe des Entgasungsbehälters 22 beträgt zwischen 1,3 und 1,8 m, insbesondere zwischen 1,2 bis 1,5 m.

Beim Entgasungsvorgang strömt die zu entgasende Flüssigkeit durch die Zuführeinrichtung 12 im Wesentlichen waagerecht in das geöffnete Einlaufventil 1 ein. Beim Übergang in das Innere des Ventilgehäuses 2 wird die Flüssigkeit von einer im Wesentlichen waagerechten Strömungsrichtung in eine im Wesentlichen senkrechte Strömungsrichtung aufgrund der Gestalt der Zuführeinrichtung 12 als Einlaufkrümmer abgelenkt. Nach Durchströmen eines senkrechten Strömungsabschnitts des Ventilgehäuses 2, welcher der Strömungsberuhigung dient, trifft die senkrecht nach unten strömende Flüssigkeit auf den Ventilteller 14 des Flüssigkeitsleitelements 4 auf. Aufgrund der vorstehend beschriebenen Oberflächengestalt der dem Ventilsitz 8 zugewandten Seite des Ventiltellers 14 wird der von oben kommende, senkrecht gerichtete Flüssigkeitsstrahl nach außen in eine im Wesentlichen horizontale bis leicht abwärts geneigte Richtung abgelenkt. Während des Durchströmens der zwischen dem Ventilteller 14 des Flüssigkeitsleitelements 4 und dem Ventilsitz 8 des Ventilgehäuses 2 ausgebildeten Öffnung bildet die Flüssigkeit einen Film aus, der sich an der Abrisskante 16 des Ventiltellers 14 ablöst.

Der derart erzeugte Flüssigkeitsfilm weist eine schirmartige Gestalt auf, während er sich in Richtung der Behälterwand radial ausbreitet. Zwischen der Ablösung des Films am Ventilteller 14 und dem Auftreffen auf die Innenwand des Entgasungsbehälters 22 stehen sowohl die Oberseite als auch die Unterseite des schirmartigen Flüssigkeitsfilms in freiem Kontakt mit dem Innenraum des Entgasungsbehälters 22. Dank seiner schirmartigen Ausbildung kann der Flüssigkeitsfilm aufgrund seiner stark vergrößerten Oberfläche in intensive Wechselwirkung mit dem Vakuum des Entgasungsbehälters treten, was die Entgasungsleistung vorteilhaft fördert.

Die Eigenschaften des vom Einlaufventil 1 ausgebildeten Flüssigkeitsfilms sind für die Qualität der Entgasung von wesentlicher Bedeutung. So bestimmt insbesondere die Dicke des Flüssigkeitsfilms, ob alle Volumenelemente der Flüssigkeit den an der Oberfläche der Flüssigkeit herrschenden Entgasungsbedingungen ausgesetzt werden oder nicht. Dies beeinflusst wiederum die Vollständigkeit der Entgasung der Flüssigkeit. Vorteilhafterweise beträgt die Dicke des Flüssigkeitsfilms bis etwa 5 mm, vorzugsweise bis 3 mm, insbesondere bis 1,5 mm.

Nach dem Auftreffen des Flüssigkeitsfilms auf einen vorbestimmten Bereich der Innenwand des Entgasungsbehälters 22, läuft die Flüssigkeit im Wesentlichen senkrecht nach unten zum Boden 24 ab. Dabei ist der Austrittswinkel der Flüssigkeit aus dem Einlaufventil 1 derart gewählt, dass ein homogener Übergang des Flüssigkeitsfilms zur Abflussrichtung an der Tankinnenwand möglich ist. Hierdurch wird eine Schaumbildung der zu entgasenden Flüssigkeit unterdrückt oder zumindest vermindert. Die entgaste Flüssigkeit sammelt sich im Bereich des Bodens 24 und wird abgezogen.

Um die Entgasungsoberfläche der Innenwand des Entgasungsbehälters 22 auszunutzen, ist es vorteilhaft, wenn der Flüssigkeitsfilm in einem definierten Bereich der Innenwand auftrifft. Besonders vorteilhaft ist es, wenn der Flüssigkeitsfilm auf die Innenwand im Bereich von der Behälteroberkante bis zu etwa einem Dreiviertel der Behälterhöhe von unten gemessen auftrifft.

Typischerweise betragen die Volumenströme durch das erfindungsgemäße Einlaufventil 5 bis 90 m$^3$/h, vorzugsweise 5 bis 60 m$^3$/h und insbesondere 5 bis 45 m$^3$/h. Der Vordruck der einströmenden Flüssigkeit ist in einem Bereich von 0 bis 3 bar, vorzugsweise 0,5 bis 2,5 bar, insbesondere etwa 1,5 bar. Die Temperatur der zu entgasenden Flüssigkeit beträgt üblicherweise 35 bis 75 °C. Insbesondere beträgt die Flüssigkeitstemperatur etwa 3 °C unter der Siedelinie der Flüssigkeit. Der Druck im Innern des Entgasungsbehälters beträgt kleiner 500 mbar, vorzugsweise kleiner 200 mbar, insbesondere kleiner 100 mbar. Der Innendurchmesser des Ventilgehäuses 2 des Einlaufventils 1 beträgt bis zu 150 mm, vorzugsweise bis zu 100 mm, insbesondere bis zu 85 mm. Die Länge des Ventilgehäuses 2 beträgt zwischen 100 und 1000 mm, vorzugsweise zischen 200 und 500 mm. Das Flüssigkeitsleitelement 4 weist einen Durchmesser auf, der zwischen dem 0,85-fachen bis 1,5-fachen, insbesondere zwischen dem 0,95-fachen bis 1,1-fachen des Durchmessers des Ventilgehäuses 2 beträgt. Das Einlaufventil 1 kann zum Entgasen von Flüssigkeiten, vorzugsweise von solchen mit einer wasserähnlichen Viskosität, verwendet werden.

Die Eigenschaften der Flüssigkeit, welche das Strömungs- bzw. Fließverhalten der Flüssigkeit beeinflussen, sind beispielsweise: Lösungsmittel, Menge und Art der darin gelösten Substanzen, Viskosität, Menge und Art der unlöslichen Feststoffe (im Fall von Suspensionen) oder Flüssigkeiten (im Fall von Emulsionen). Unter den physikalischen Randbedingungen wird im Rahmen dieser Erfindung beispielsweise verstanden: die Temperatur, der Anströmdruck und der Volumenstrom der Flüssigkeit im Einlaufventil 1 sowie der Druck im Entgasungsbehälter.

Erfindungsgemäß wird die Ausströmöffnung des Einlaufventils 1 in Abhängigkeit von den Eigenschaften der zu entgasenden Flüssigkeit und den physikalischen Randbedingungen beim Entgasungsvorgang eingestellt. Wenigstens die vorstehenden Bedingungen werden bei der Einstellung der Größe der Ausströmöffnung des Einlaufventils 1 zur Ausbildung eines optimalen Flüssigkeitsfilms im Hinblick auf die Entgasungsund Schaumbildungs-Eigenschaften berücksichtigt.

Beispielsweise wird eine erste Flüssigkeit mit einer Größe der Ausströmöffnung entgast, wobei die Öffnungsgröße entsprechend den Eigenschaften der Flüssigkeiten einen optimalen Flüssigkeitsfilm erzeugt. Wird die Entgasung mit derselben Einstellung der Ausströmöffnung der Entgasungsvorrichtung mit einer zweiten Flüssigkeit mit anderen Eigenschaften als die erste Flüssigkeit fortgesetzt, so ist es wahrscheinlich, dass die Beibehaltung der Größe der Ausströmöffnung für die Entgasung der zweiten Flüssigkeit zu einem von der optimalen Gestalt abweichenden Flüssigkeitsfilm führen wird. Daher wurde erfindungsgemäß die Möglichkeit geschaffen, die Größe der Ausströmöffnung bei einer Umstellung der Flüssigkeit oder einer sonstigen Änderung der Flüssigkeitszusammensetzung derart anzupassen, dass ein für die jeweilige zu entgasende Flüssigkeit optimaler Flüssigkeitsfilm ausgebildet wird.

Während eines Entgasungsvorgangs kann es zu einer Störung bei einem der Entgasungsvorrichtung vor- oder nachgeschalteten Aggregat, wie beispielsweise einem Füller, kommen. Dies kann eine Änderung des Volumenstroms der zu entgasenden Flüssigkeit bewirken. Die Änderung des Volumenstroms kann bei Beibehaltung derselben Größe der Ausströmöffnung des Einlaufventils 1 wiederum die Ausbildung eines nicht optimalen Flüssigkeitsfilm zur Folge haben, wodurch die Entgasungswirkung und/oder die Schaumbildung negativ beeinflusst würden. Da die Größe der Öffnung erfindungsgemäß beliebig veränderbar ist, wird der Öffnungsgrad des Einlaufventils 1 derart in Abhängigkeit vom Volumenstrom gesteuert, dass ein optimaler Flüssigkeitsfilm ausgebildet wird. Der Öffnungsgrad wird somit während des Entgasungsvorgangs in Abhängigkeit des Volumenstroms dahingehend nachgeregelt, dass stets ein optimaler Flüssigkeitsfilm ausgebildet wird.

Analog zur Steuerung des Öffnungsgrads des Einlaufventils 1 in Abhängigkeit vom Volumenstrom kann auch eine Steuerung in Abhängigkeit von der Viskosität, vom Druck und/oder von der Temperatur der zu entgasenden Flüssigkeit erfolgen. Denkbar ist auch, dass die Steuerung auf einer beliebigen Kombination der vorstehend genannten Parameter basiert.

Die Steuerung des Öffnungsgrads des Einlaufventils 1 greift auf eine vor oder bei Inbetriebnahme erstellte und hinterlegte Kalibrierfunktion zurück. Erfindungsgemäß kann die Kalibrierung basieren auf: dem Volumenstrom, der Viskosität, der Temperatur, dem Druck, der Zusammensetzung der Flüssigkeit oder dergleichen sowie auf einer beliebigen Kombination der vorstehend genannten Parameter. Darüber hinaus ist die Kalibrierung von der Baugröße bzw. dem Entgasungstankdurchmesser abhängig.

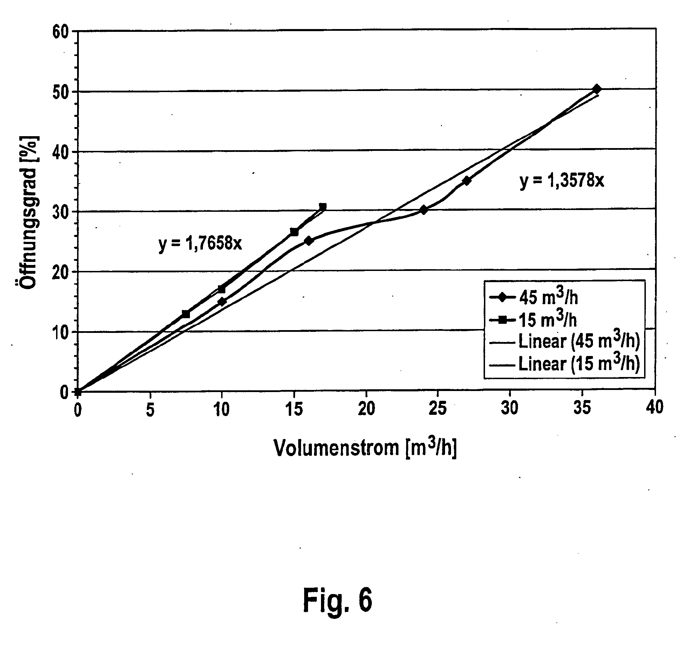

Ein Beispiel für eine volumenstrombezogene Kalibrierfunktion ist in Fig. 6 dargestellt. Zur Erstellung der flüssigkeitsspezifischen Kalibrierfunktion wird bei einem vorgegebenen Volumenstrom einer bestimmten Flüssigkeit der Öffnungsgrad ermittelt, bei dem sich ein in Hinblick auf die Entgasung und Schaumbildung optimaler Flüssigkeitsfilm ausbildet. Einen optimalen Flüssigkeitsfilm kennzeichnen eine hinsichtlich des Entgasungsverhaltens optimale Dicke des Films und/oder ein Auftreffen des Films in einem vorgegebenen Bereich der Behälterinnenwand. Die Beurteilung der Qualität des Films kann manuell durch geschultes Personal oder automatisch erfolgen. Eine automatische Erfassung der Filmqualität kann durch im Innern des Entgasungsbehälters 22 oder in dessen Innenwand vorhandene Sensoren oder dergleichen erfolgen. Ferner ist eine optische Erfassung mit automatisierter Bilderfassung und -auswertung, beispielsweise mit Hilfe einer Kamera oder dergleichen, denkbar.

Analog zum vorstehend Beschriebenen wird der Flüssigkeitsvolumenstroms über den gesamten Volumenstrombereich, für den die Entgasungsvorrichtung ausgelegt ist, variiert. Dabei wird für jeden Volumenstrom der Öffnungsgrad bei optimaler Filmbildung ermittelt. Anschließend werden die derart erhaltenen Messpunkte kombiniert und daraus eine lineare oder exponentielle Kalibrierfunktion berechnet. Kalibrierfunktionen höherer Ordnung sind in Spezialfällen auch möglich. Neben der Art der Flüssigkeit können bei der Kalibrierung auch andere Parameter, wie beispielsweise die Geometrie und insbesondere der Durchmesser des Entgasungsbehälters berücksichtigt werden. Das in Fig. 6 dargestellte Beispiel weist für einen Volumenstrombereich bis 15 m³/h eine Funktion auf:

$$\text{Öffnungsgrad [\%]} = f(\text{Volumenstrom [m}^3\text{/h]}) = 1{,}7658 \cdot \text{Volumenstrom [m}^3\text{/h]}$$

Für einen Volumenstrombereich bis 45 m³/h wurde nachfolgende Funktion ermittelt:

$$\text{Öffnungsgrad [\%]} = f(\text{Volumenstrom [m}^3\text{/h]}) = 1{,}3578 \cdot \text{Volumenstrom [m}^3\text{/h]}$$

In der erfindungsgemäßen Entgasungsvorrichtung 20 können Flüssigkeiten und insbesondere flüssige Lebensmittel oder entsprechende Vorstufen entgast werden. Insbesondere ist die Vorrichtung 20 zum Entgasen von Flüssigkeiten wie Wasser, Bier, Gemüsesaft, Fruchtsaft, Limonade, Nektar, Honig, Milch, Sirup, Flüssigkeiten auf Teebasis, Grundstoff, Konzentrate und beliebige Mischungen dieser Flüssigkeiten, oder dergleichen vorgesehen. Dabei können die vorstehend genannten Flüssigkeiten auch Feststoffe, wie beispielsweise Pulpen, Fruchtmark, Ballaststoffe, Eiweiß oder dergleichen enthalten.

Die Erfindung lässt neben den erläuterten Ausführungsbeispielen weitere Gestaltungsansätze zu.

Beim erfindungsgemäßen Einlaufventil 1 muss die Flüssigkeitszuführung nicht notwendigerweise aus horizontaler Richtung erfolgen. Die Zuführung kann auch aus einer beliebigen anderen Richtung, insbesondere aus der Vertikalen erfolgen.

Die Öffnung des Einlaufventils 1, die zwischen den Ventilteller 14 und dem Ventilsitz 8 bei wenigstens teilweise geöffnetem Ventil ausgebildet wird, ist nicht auf einen Ringspalt beschränkt. Sie kann auch als ein oder mehrere Löcher bzw. eine Lochreihe, ein oder mehrere Schlitze oder eine andere geeignete Gestalt ausgebildet sein.

## Patentansprüche

1.  Einlaufventil (1) zum Einbringen einer Flüssigkeit in eine Entgasungsvorrichtung (20), mit:

    einem Ventilgehäuse (2), einem Flüssigkeitsleitelement (4), und einer dem Einlaufventil (1) zugeordneten Steuereinrichtung (6);
    wobei das Flüssigkeitsleitelement (4) einen Ventilteller (14) aufweist;
    wobei das Ventilgehäuse (2) einen Ventilsitz (8) aufweist;
    wobei zwischen dem Ventilteller (14) und dem Ventilsitz (8) eine Öffnung ausgebildet ist, durch welche die Flüssigkeit in die Entgasungsvorrichtung (20) einbringbar ist;
    wobei die durch das Einlaufventil (1) strömende Flüssigkeit an einer Oberfläche des Flüssigkeitsleitelements (4) unter Ausbildung eines Flüssigkeitsfilms umlenkbar ist;
    wobei die Größe der Öffnung mit Hilfe der Steuereinrichtung (6) zwischen einer vollständig geöffneten und einer vollständig geschlossenen Stellung beliebig veränderbar ist;
    wobei die Steuereinrichtung (6) wenigstens einen Signalaufnehmer aufweist;
    wobei der wenigstens eine Signalaufnehmer eine Messvorrichtung für die Parameter Durchfluss, Viskosität, Temperatur und/oder Druck ist;
    wobei die Größe der Öffnung beim Entgasungsvorgang in Abhängigkeit von den Eigenschaften der zu entgasenden Flüssigkeit und den physikalischen Randbedingungen einstellbar ist;
    wobei unter den Eigenschaften der zu entgasenden Flüssigkeit und den physikalischen Randbedingungen der Volumenstrom, die Viskosität, der Druck, die Temperatur und/oder die Zusammensetzung der zu entgasenden Flüssigkeit im Einlaufventil (1) und/oder der Druck in einem Entgasungsbehälter (22) verstanden wird; und
    wobei die Größe der Öffnung mittels einer vor oder bei Inbetriebnahme des Einlaufventils (1) erstellten und hinterlegten Kalibrierfunktion einstellbar ist.

2.  Vorrichtung (20) zum Entgasen von Flüssigkeiten, wobei die Vorrichtung (20) ein Einlaufventil (1) nach Anspruch 1 aufweist.

3.  Verfahren zur Steuerung des Entgasens von Flüssigkeiten, wobei eine Flüssigkeit in eine Entgasungsvorrichtung (20) mittels eines Einlaufventils (1) nach Anspruch 1 eingebracht wird;
    wobei die durch das Einlaufventil (1) strömende Flüssigkeit an einer Oberfläche des Flüssigkeitsleitelements (4) unter Ausbildung eines Flüssigkeitsfilms umgelenkt wird;
    wobei der Flüssigkeitsfilm schirmförmig ausgebildet ist;
    wobei die Größe der Öffnung beim Entgasungsvorgang in Abhängigkeit von den Eigenschaften der zu entgasenden Flüssigkeit und den physikalischen Randbedingungen eingestellt wird;
    wobei unter den Eigenschaften der zu entgasenden Flüssigkeit und den physikalischen Randbedingungen der Volumenstrom, die Viskosität, der Druck, die Temperatur und/oder die Zusammensetzung der zu entgasenden Flüssigkeit im Einlaufventil (1) und/oder der Druck in einem Entgasungsbehälter (22) verstanden wird; und
    wobei die Größe der Öffnung mittels einer vor oder bei Inbetriebnahme des Einlaufventils (1) erstellten und hinterlegten Kalibrierfunktion eingestellt wird.

4.  Verfahren zur Steuerung des Entgasens von Flüssigkeiten nach Anspruch 3, wobei der durch das Flüssigkeitsleitelement (4) erzeugte Flüssigkeitsfilm auf eine Innenwand der Entgasungsvorrichtung (20) in einem vorbestimmten Bereich auftritt.

**5.** Verfahren zum Entgasen von Flüssigkeiten unter Verwendung einer Vorrichtung (20) nach Anspruch 2 mit wenigstens einem der Verfahrensschritte nach wenigstens einem der Ansprüche 3 oder 4.

## Claims

**1.** A feed valve (1) for introducing a liquid into a degassing device (20), comprising:

a valve housing (2), a liquid guide member (4), and a control means (6) associated with the feed valve (1);
wherein the liquid guide member (4) has a valve disk (14);
wherein the valve housing (2) has a valve seat (8);
wherein an opening through which the liquid may be introduced into the degassing device (20) is formed between the valve disk (14) and the valve seat (8);
wherein the liquid flowing through the feed valve (1) may be deflected at a surface of the liquid guide member (4) so as to form a liquid film;
wherein the size of the opening may be changed randomly between a completely opened position and a completely closed position with the aid of the control means (6);
wherein the control means (6) has at least one signal generator;
wherein the at least one signal generator is a measurement device for the parameters flow rate, viscosity, temperature, and/or pressure;
wherein during the degassing process, the size of the opening may be controlled in accordance with the properties of the liquid to be degassed and the marginal physical conditions;
wherein the properties of the liquid to be degassed and the marginal physical conditions are defined as the volume flow, the viscosity, the pressure, the temperature, and/or the composition of the liquid to be degassed flowing through the feed valve (1) and/or the pressure in a degassing container (22); and
wherein the size of the aperture may be controlled by means of a calibrating function generated and deposited before or while taking up operation of the feed valve (1).

**2.** A device (20) for degassing liquids, wherein the device (20) includes a feed valve (1) according to claim 1.

**3.** A method of controlling the degassing of liquids, wherein a liquid is introduced into a degassing device (20) by means of a feed valve (1) according to claim 1;
wherein the liquid flowing through the feed valve (1) is deflected at a surface of the liquid guide member (4) so as to form a liquid film;
wherein the liquid film is configured in the shape of an umbrella;
wherein during the degassing process, the size of the opening is controlled in accordance with the properties of the liquid to be degassed and the marginal physical conditions;
wherein the properties of the liquid to be degassed and the marginal physical conditions are defined as the volume flow, the viscosity, the pressure, the temperature, and/or the composition of the liquid to be degassed in the feed valve (1) and/or the pressure in a degassing container (22); and
wherein the size of the aperture is controlled by means of a calibrating function generated and deposited before or while taking up operation of the feed valve (1).

**4.** The method of controlling the degassing of liquids according to claim 3, wherein the liquid film produced by the liquid guide member (4) impacts on an inner wall of the degassing device (20) in a predetermined area.

**5.** A method for degassing liquids by making use of a device (20) according to claim 2 comprising at least one of the method steps according to at least one of claims 3 or 4.

## Revendications

**1.** Soupape d'admission (1) destinée à introduire un liquide dans un dispositif de dégazage (20) avec :

un boîtier de soupape (2), un élément conducteur de liquide (4), et un dispositif de commande (6) associé à la soupape d'admission (1) ;

l'élément conducteur de liquide (4) présentant une tête de soupape (14) ;

le boîtier de soupape (2) présentant un siège de soupape (8) ;

une ouverture étant réalisée entre la tête de soupape (14) et le siège de soupape (8), par laquelle le liquide peut être introduit dans le dispositif de dégazage (20) ;

le liquide s'écoulant par la soupape d'admission (1) pouvant être dévié sur une surface de l'élément conducteur de liquide (4) en réalisant un film liquide ;

la grandeur de l'ouverture pouvant être modifiée de manière quelconque à l'aide du dispositif de commande (6) entre une position complètement ouverte et une position complètement fermée ;

le dispositif de commande (6) présentant au moins un capteur de signal ;

l'au moins un capteur de signal étant un dispositif de mesure pour les paramètres de débit, viscosité, température et/ou pression ;

la grandeur de l'ouverture pouvant être réglée lors du processus de dégazage en fonction des propriétés du liquide à dégazer et des conditions secondaires physiques ;

le débit volumétrique, la viscosité, la pression, la température et/ou la composition du liquide à dégazer dans la soupape d'admission (1) et/ou la pression dans un réservoir de dégazage (22) étant entendue par les propriétés du liquide à dégazer et les conditions secondaires physiques ; et

la grandeur de l'ouverture pouvant être réglée à l'aide d'une fonction de calibrage enregistrée et établie avant ou lors de la mise en service de la soupape d'admission (1).

2. Dispositif (20) de dégazage de liquides, le dispositif (20) présentant une soupape d'admission (1) selon la revendication 1.

3. Procédé de commande du dégazage de liquides, un liquide étant introduit dans un dispositif de dégazage (20) à l'aide d'une soupape d'admission (1) selon la revendication 1 ;

le liquide s'écoulant par la soupape d'admission (1) étant dévié sur une surface de l'élément conducteur de liquide (4) en réalisant un film liquide ;

le film liquide étant réalisé en forme d'écran ;

la grandeur de l'ouverture étant réglée lors du processus de dégazage en fonction des propriétés du liquide à dégazer et des conditions secondaires physiques ;

le débit volumétrique, la viscosité, la pression, la température et/ou la composition du liquide à dégazer dans la soupape d'admission (1) et/ou la pression dans un réservoir de dégazage (22) étant entendue par les propriétés du liquide à dégazer et les conditions secondaires physiques ; et

la grandeur de l'ouverture pouvant être réglée à l'aide d'une fonction de calibrage enregistrée et établie avant ou lors de la mise en service de la soupape d'admission (1).

4. Procédé de commande du dégazage de liquides selon la revendication 3, le film liquide généré par l'élément conducteur de liquide (4) touchant une paroi intérieure du dispositif de dégazage (20) dans une zone prédéterminée.

5. Procédé de dégazage de liquides en utilisant un dispositif (20) selon la revendication 2, avec au moins l'une des étapes de procédé selon au moins l'une quelconque des revendications 3 ou 4.

**Fig. 1**

EP 2 123 339 B1

Fig. 2

12

**Fig. 3**

Fig. 4

**Fig. 5**

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2003164706 A
- DE 29722673 U1